# EUROPEAN PATENT APPLICATION

(11) **EP 1 371 297 A1**
(43) Date of publication of application: **17.12.2003**
(21) Application number: 01975085.0
(22) Date of filing: 26.09.2001
(51) Int. Cl.: A23L 1/30

(54) **METHOD FOR PRODUCING A HEALTH FOOD ADDITIVE AND SAID HEALTH FOOD ADDITIVE**

(30) Priority: 27.09.2000 RU 2000124572
(71) Applicant: Zakrytoe Aktsionernoe Obschestvo " BIOFIT", 603052 Nizhny Novgorod (RU)
(72) Inventor: GRUZDEVA, Anna Evgenievna, Nizhny Novgorod, 603167 (RU); GRISHATOVA, Natalya Vasilievna, Nizhny Novgorod, 603606 (RU); POTEMKINA, Elena Vladislavovna, Nizhny Novgorod, 603032 (RU); TIMOFEEVA, Elena Alexandrovna, Nizhny Novgorod, 603128 (RU)
(74) Representative: Epping Hermann & Fischer
(86) International application number: RU0100388
(87) International publication number: WO02028203

(57) **Abstract**

The invention relates to a health food additive. The inventive method consists in pre-pulverising a prepared natural raw material, drying the pulverised material, deep freezing the dried pulverised material, pulverising the frozen material and packaging the obtained product. The pulverised frozen material is sterilised by conditioning it in a carbon dioxide medium at a pressure ranging from 50 to 90 kg/cm² (approximately from 5 MPa to 9 MPa) during a time period ranging from 1 to 6 hours. A vegetal raw material such as vegetables, berries, cereals, water plants, medicinal plants, mushrooms etc. and animal raw material such as eggshells, clamshells, animal skin etc. can be used a natural raw material.

## Description

### Field of the invention

The present invention relates to food additives (supplements), which have a favorable effect on the health of consumers, and, in particular, to a method for producing such food additives from natural starting material of vegetable or animal origin, and also to a health food additive produced by the method according to the invention.

### Background of the invention

The prior art discloses various methods for producing food additives/supplements from, *inter alia*, vegetable material, as in DE 37 38 992 (1988). From the prior art it is evident, however, that until presently the problem of achieving, on the one hand, high microbiological purity of a product produced from a natural starting material and, on the other hand, maximum retention of the useful substances initially present in the natural starting material, has not been solved. It is well known that the use of high temperatures and various kinds of radiation results in degradation or some other change of the useful substances in the initial material, since the chemical structure of the substances (for example, vitamins) is intricate and easily degrade or react with other substances.

Some known methods for producing health food additives are energy consuming and complicated. For example, patent RU 2063151 (1996) discloses a method for producing a vegetable food additive on the basis of ginseng root, the method comprising the steps of drying a preprocessed starting vegetable material to a predetermined water content, chopping into pieces, deep freezing with liquid nitrogen, comminuting and even deeper freezing with liquid nitrogen, after which the material having a temperature in the range of -190°C to-193°C is finally ground into powder with particles not greater than 25 microns, and packaged. Due to the complicated and expensive technology of production, thus obtained food supplement is used only in pharmaceutical products.

RU 2110194 discloses a method for producing a food additive from a vegetable starting material, the method comprising the steps of preliminary chopping the vegetables or fruit material to the particles of a size between 10 and 35 mm, drying the particles under vacuum of 0.01-0.5 kg/cm² (i.e., at a pressure reduction for about 99 to 50 kPa) and at a temperature of from 20°C to 80°C to a water content of not more than 10%. The dried frozen material is further ground into powder with a particle size of 50 to 600 microns, and the obtained powder is packaged or optionally pelletized and then packaged.

The aforementioned method, however, cannot provide sufficient sterility of the vegetable material, since the reliable extermination of the spores of microorganisms, which are present in the vegetable starting material, can be achieved only at a rather high temperature resulting in degradation of some healthy substances and for that reason being extremely undesirable for processing health food additives.

### Summary of the invention

The object of the present invention is to provide a processing method ensuring preservation of substantially all healthy substances present in the initial material and at the same time ensuring the required sterility of the obtained food additive.

This object is achieved by a method for producing a health food additive, comprising the steps of chopping a prepared natural starting material, drying the chopped material, deep freezing the dried material, comminuting the frozen material and packaging the obtained product, wherein the drying step is carried out either under vacuum up to 0.01 kg/cm² (i.e., at an absolute pressure which may be reduced down about 1 kPa), or at atmospheric pressure, and the drying temperature may be from 10 to 150°C, i.e., in a wide range including the ambient temperature and the temperatures of the instant sterilization, depending on the pressure used during the drying which is effected within a period of from 30 minutes to 24 hours.

The novelty of the method according to the present invention is based mainly on that, after the step of comminuting the frozen material, the comminuted material is sterilized by means of conditioning the material in a carbon dioxide medium at a pressure from 50 to 90 kg/cm² (about 5 to 9 MPa), preferably at a temperature of from 2 to 120°C.

The frozen material is kept in the pressurized carbon dioxide medium usually for 1 to 6 hours.

The chopped material is preferably frozen to a temperature of -20 to -180°C.

The frozen material is preferably comminuted to the particles having the size distribution in the range of 1 to 1000 microns.

The natural starting material may be either of vegetable origin, including e.g. vegetables, berries, fruit, cereals and their seeds, water plants, galenic material, mushrooms and nut shells, or of animal origin, including e.g. eggshells, especially the shells of the eggs of chicken and/or reptiles, the shells of shellfish, and/or the skin of animals.

When the starting material is fresh carrot, the step of drying is carried out at a pressure of 1,033 kg/cm² and at a temperature of 40°C for 6 hours, the freezing and comminuting steps being carried out at -80°C, and then the comminuted material is sterilized in a carbon dioxide medium pressurized at 70 kg/cm², at a temperature 60°C for 1 to 6 hours.

When the starting material is apples, the step of drying is carried out at a pressure of 0.2 kg/cm² and at a temperature of 25°C for 8 hours, the freezing and comminuting steps being carried out at -80°C, and then the comminuted material is sterilized in a carbon dioxide medium pressurized at 60 kg/cm², at a temperature of 50°C for 1 hour.

When the starting material is Aronia berries, the step of drying is carried out at a pressure of 0.5 kg/cm² and at a temperature of 30°C for 16 hours, the freezing and comminuting steps being carried out at -100°C, and then the comminuted material is sterilized in a carbon dioxide medium pressurized at 90 kg/cm², at a temperature of 40°C for 2.5 hours.

When the starting material is pumpkin, the step of drying is carried out at a pressure of 0.01 kg/cm² and at a temperature of 20°C for 6 hours, the freezing and comminuting steps being carried out at -30°C, and then the comminuted material is sterilized in a carbon dioxide medium pressurized at 90 kg/cm², at a temperature of 20°C for 2 hours.

When the starting material is oat seeds, the step of drying is carried out at a pressure of 0.01 kg/cm² and at a temperature of 80°C for 5 hours, the freezing and comminuting steps being carried out at -50°C, and then the comminuted material is sterilized in a carbon dioxide medium pressurized at 60 kg/cm² , at a temperature of 30°C for 4 hours.

When the starting material is black currant leaves, the step of drying is carried out at a pressure of 0,03 kg/cm² and at a temperature of 40°C for 3 hours, the freezing and comminuting steps being carried out at -30°C, and then the comminuted material is sterilized in a carbon dioxide medium pressurized at 90 kg/cm², at a temperature of 45°C for 2 hours.

When the starting material is chicken egg shells, the step of drying is carried out at a pressure of 0,3 kg/cm² and at a temperature of 150°C for 30 minutes, the freezing and comminuting steps being carried out at -40°C, and then the comminuted material is sterilized in a carbon dioxide medium pressurized at 50 kg/cm², at a temperature of 2°C for 1 hour.

When the starting material is parsley, the step of drying is carried out at a pressure of 0.8 kg/cm² and at a temperature of 80°C for 2 hours, the freezing and comminuting steps being carried out at -100°C, and then the comminuted material is sterilized in a carbon dioxide medium pressurized at 90 kg/cm², at a temperature of 80°C for 6 hours.

### Detailed description of the invention

The health food additive obtained by the method according to any one of accompanying claims has a particle size distribution in the range of 1 to 1000 microns and retains up to 80% of the vitamins, elements, trace elements and other biologically active substances initially present in the starting material. The degree of assimilation of the additive is high, besides the additive is substantially sterile. Furthermore, the additive is rich in well-dispersed fibers being a good adsorbent.

In accordance with the invention, the processing of the wide variety of natural starting materials of vegetable and animal origin, containing important biologically active substances, by means of drying the material at a pressure of 0.01 to 1.0 kg/cm² and temperature in the range of 20°C to 150°C, freezing, comminuting and sterilizing the comminuted frozen material in the indicated medium at a high pressure of 50 to 90 kg/cm² and at a temperature in the range of 2°C to 120°C for 1 to 6 hours, allows to obtain various additives (supplements) retaining up to 80% of the biologically active substances initially present in the starting materials, the additives being well-dispersed and having a large surface area and high microbiological purity (i.e. substantially free from microbial contamination).

The step of drying the material can be carried out within a broad range of pressure and temperature, that is, it can be effected at an atmospheric or reduced pressure and at the temperature of 10 to 150°C. This allows to use various types of drying devices and, at the same time, to obtain the dried material of good quality.

High temperatures of about 150°C are suitable for some raw materials, for example, chicken egg shells can be dried at a high temperature to kill the pathogens, especially *Salmonella* sp., because the temperature does not affect the content of calcium in the material.

Drying of the starting material at a temperature below 10°C and at a pressure less than 0.01 kg/cm² is not effective, because it takes a very long time; but drying at a temperature above 150°C and at a pressure greater than 1.0 kg/cm² does not further improve the quality of the product, although it is energy consuming.

Sterilization of the comminuted material by means of conditioning it in a carbon dioxide medium at a pressure of 50 to 90 kg/cm² and at a temperature of 2°C to 120°C results in killing all microorganisms, including spores, on the surface of the material, allowing to obtain the product having high purity from the microbiological point of view.

The sterilization at a pressure less than 50 kg/cm² and at a temperature less than 2°C does not provide the desired contamination-free product, and the sterilization at a pressure greater than 90 kg/cm² and at a temperature higher than 120°C does not significantly enhance the purity of the product, but results in degradation of some biologically active substances in the product.

The method according to the present invention is carried out in the following manner:

The prepared vegetable starting material selected from vegetables, berries, fruit, cereals or seeds thereof, water plants, galenic materials, mushrooms, nut shells, eggshells, especially the eggs of chicken and reptiles, shells of shellfish and/or animal skins, is chopped in small pieces having a size of 10 to 35 mm, then the chopped material is dried at a pressure of 0.01 to 1.00 kg/cm² and at a temperature of 10 to 150°C to a water content not greater than 20% for a period of 30 min to 24 hours. The obtained dry mass is then deep-frozen with an appropriate until the temperature of the whole mass is from -10 to -180°C and comminuted to a particle size of 1 to 1000 microns, and then the mass of the obtained particles is conditioned in a carbon dioxide medium at a pressure of 50 to 90 kg/cm² and at a temperature of 2 to 120°C for from 1 to 6 hours, then the product is packaged or optionally pelletized in a dosage form and packaged.

### The preferable embodiments of the method according to the present invention

### Example 1

### Preparation of a food additive from carrot

A correspondingly prepared (cleaned, trimmed and washed) carrot was chopped into small pieces having a size of 30 to 35 mm, the pieces were dried at a pressure of 1.033 kg/cm² and at a temperature of 40°C for 6 hours to a water content of not greater than 3%. The dry particulate material was frozen with the use of liquid nitrogen to a temperature of-80°C in the center of material, and the frozen material was comminuted to a particle size of not greater than 200 microns. The comminuted material in bulk was placed in a gaseous medium of carbon dioxide, and the conditioning of the material in carbon dioxide was carried out at a pressure of 70 kg/cm² and at 60°C for 3 hours. The resulting carrot additive was packaged.

The experimental data obtained for biochemical properties and microbiological purity of the additive are shown in Tables 1 and 2.

### Example 2

### Preparation of a food additive from Aronia berries

The method was carried out generally according to Example 1, except for the following difference. The berries were dried at a pressure of 0.5 kg/cm², at 30°C for 16 hours, the comminuting step was carried out in liquid nitrogen at a temperature of -100°C to a particle size of not greater than 70 microns, and the comminuted material was conditioned in carbon dioxide at a pressure of 90 kg/cm² at 40°C for 2.5 hours.

### Example 3

### Preparation of a food additive from parsley

The method was carried out generally according to Example 1, except for the following difference. Parsley was dried at a pressure of 0.8 kg/cm² at 80°C for 2 hours, the comminuting step was carried out in liquid nitrogen at -100°C to a particle size of not greater than 300 microns, and the comminuted material was conditioned in carbon dioxide at a pressure of 90 kg/cm² at 80°C for 6 hours.

### Example 4

### Preparation of a food additive from apples

The method was carried out generally according to Example 1, except for the following difference. Apples were dried at a pressure of 0.2 kg/cm² at 25°C for 8 hours. The comminuting step was carried out in liquid nitrogen at -80°C to a particle size of not greater than 70 microns, and the comminuted material was conditioned in carbon dioxide at a pressure of 60 kg/cm² at 50°C for 1 hour.

### Example 5

### Preparation of a food additive from pumpkin

The method was carried out generally according to Example 1, except for the following difference. Pumpkin was dried at a pressure of 0.01 kg/cm², temperature of 20°C for 6 hours, the comminuting step was carried out in liquid nitrogen at -30°C to a particle size of not greater than 400 microns, the comminuted material was conditioned in carbon dioxide at a pressure of 90 kg/cm² at 20°C for 2 hours.

### Example 6

### Preparation of a food additive from oat seeds

The method was carried out generally according to Example 1, except for the following difference. The seeds were dried at a pressure of 0.01 kg/cm² at 80°C for 5 hours, the comminuting step was carried out in liquid nitrogen at-50°C to a particle size of not greater than 50 microns, and the comminuted material was conditioned in carbon dioxide at a pressure of 60 kg/cm² at 30°C for 4 hours.

### Example 7

### Preparation of a food additive from wheat germs

The method was carried out generally in accordance with Example 1, except for the following difference. The wheat germs were dried at a pressure of 0.01 kg/cm² and at 80°C for 5 hours, the comminuting step was carried out in liquid nitrogen at a temperature of -50°C to a particle size of not greater than 500 microns, and the comminuted material was conditioned in carbon dioxide at a pressure of 60 kg/cm² at 30°C for 4 hours.

### Example 8

### Preparation of a food additive from leaves of black currant

The method was carried out generally in accordance with Example 1, except for the following difference. The leaves of black currant was dried at a pressure of 0.03 kg/cm², at 40°C for 4 hours, the comminuting step was carried out in liquid nitrogen at -30°C to a particle size of not greater than 100 microns, the comminuted material was conditioned in carbon dioxide at a pressure of 90 kg/cm² at 45°C for 2 hours.

### Example 9

### Preparation of a food additive from mushrooms

The method was carried generally in accordance with Example 1, except for the following difference. The mushrooms (boletus material) were dried at a pressure of 0.01 kg/cm², at 50°C for 5 hours, the comminuting step was carried out in liquid nitrogen at -20°C to a particle size of not greater than 50 microns, and the comminuted material was conditioned in carbon dioxide at a pressure of 90 kg/cm² at 80°C for 4 hours.

### Example 10

### Preparation of a food additive from chicken egg shells

The method was carried generally in accordance with Example 1, except for the following difference. The egg shells were dried at a pressure of 0.3 kg/cm² and at 150°C for 30 min, the comminuting step was carried out in liquid nitrogen at -40°C to a particle size of not greater than 80 microns, the comminuted shells were conditioned in carbon dioxide medium at a pressure of 50 kg/cm² at 2°C for 1 hour.

### Example 11

### Preparation of a food additive from crab shells

The method was carried generally in accordance with Example 1, except for the following difference. The crab shells were dried at a pressure of 0.2 kg/cm² and at 140°C for 1 hour, the comminuting step was carried out in liquid nitrogen at -50°C to a particle size of not greater than 350 microns, and the comminuted material was conditioned in carbon dioxide at a pressure of 65 kg/cm² at 50°C for 2.5 hours.

### Example 12

### Preparation of a food additive from a pig skin

The method was carried generally in accordance with Example 1, except for the following difference. The pig skin was dried at a pressure of 1.0 kg/cm² and at 30°C for 10 hours, the comminuting step was carried out in liquid nitrogen at -80°C to a particle size of not greater than 1000 microns, and the comminuted material was conditioned in carbon dioxide at a pressure of 90 kg/cm² at 120°C for 6 hours.

In the additives obtained in Examples 10, 11, 12, the biologically active substances retained completely.

**Table 2**

| No | Name of index | Examples 1-12 |
|---|---|---|
| 1 | Number of mesophilic aerobiotic and facultative-anaerobiotic microorganisms, CFU in 1 g | 500 |
| 2 | Bacteria of colon bacillus group (coliform), in 0.1 g | absent |
| 3 | E. coli, in 10 g of powder | absent |
| 4 | Pathogenic microorganisms, including salmonellas, in 25 g | absent |
| 5 | B. cereus, in 1 g of powder | 100 |
| 6 | Amount of mold, in 1 g | 50 |
| 7 | Amount of yeast, in 1 g | 10 |

From the data it appears that the method according to the present invention allows to produce food additives (or food supplements) from any material selected from a broad group of natural materials of vegetable or animal origin. The additives obtained by the method according to the present invention retain up to 80%, and sometimes even 100% of the biologically active substances initially present in the starting material and also retain other properties of the starting material; the obtained particulate additives have a large surface area providing high accessibility of the useful substances, and they have a high microbiological purity. Therefore the health food additives obtained by the method according to the present invention may be successfully used for manufacturing baby food or food supplements, especially in pelletized form; the additives according to the present invention may be also used for the fortification of different food products such as milk, meat, and cereals with the biologically active substances; they can be used in beverages, e.g. in juice, or they can be used as a substrate to be extracted, or for manufacturing cosmetic and pharmaceutical products.

The method according to the present invention offers an important improvement to the process of manufacturing food supplements from the natural sources.

It will be apparent for a person skilled in the art, that various modifications of the method are possible within the scope of the accompanying set of claims. For example, the sterilized material obtained by this method may be additionally subjected to extraction with an aqueous or organic liquid in a known manner to obtain a useful extract.

### Sources of information

1. Application FRG No. 3738992 of 28 April 1988.
2. Patent RU No. 2063151, published in Bulletin No. 19, 1996, No. 94042258/13 of 1 December 1994, "Method for producing food additive from ginseng root."
3. Patent RU No. 2110194, published in Bulletin No. 13, 1998, No. 97108428/13 of 3 June 1997, "Method for producing food additive from vegetable material."

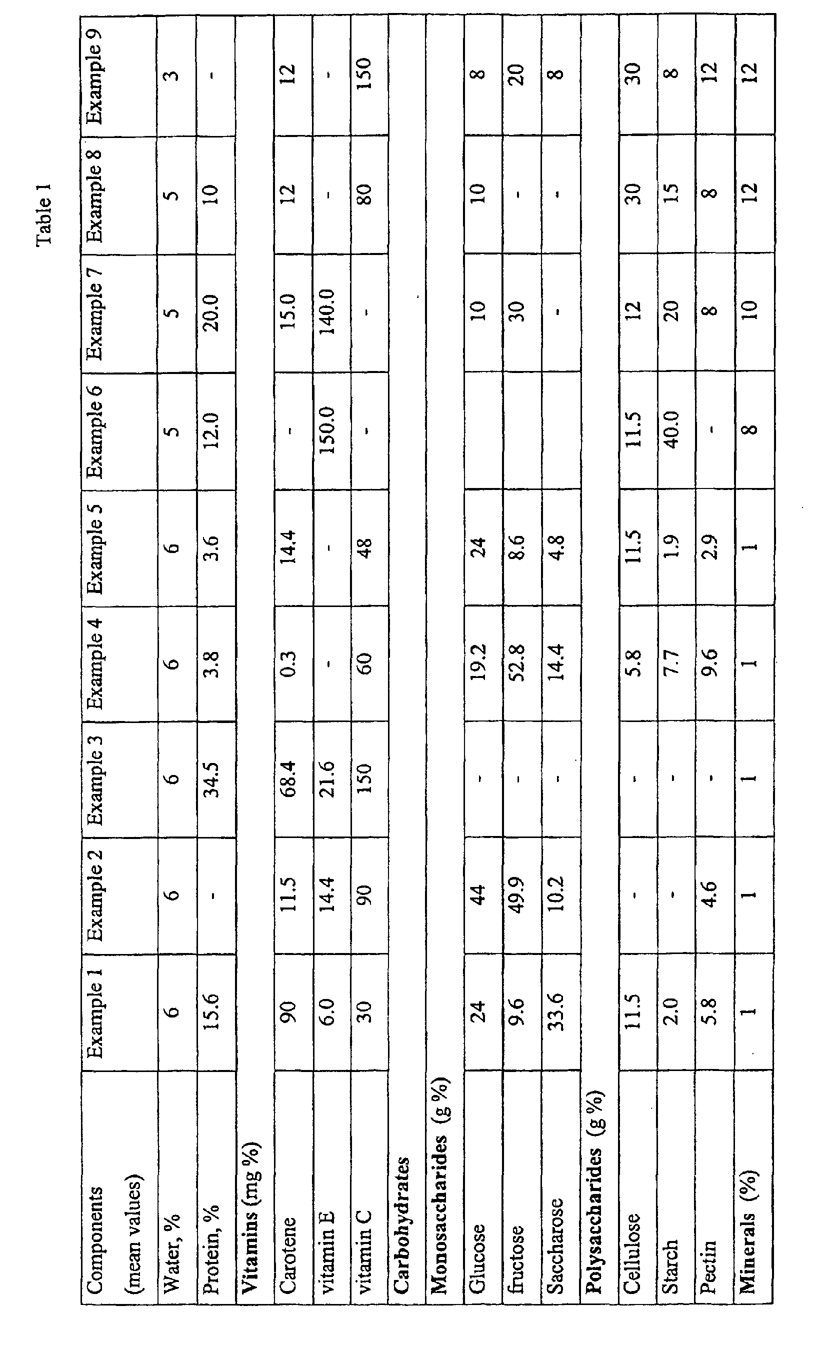

## Claims

1. A method for producing a health food additive, comprising the steps of chopping a prepared natural starting material, drying the chopped material, deep-freezing the dried material, comminuting the resulting frozen material and packaging the obtained product, **characterized in that**, after the step of comminuting the frozen material, the comminuted material is sterilized by means of conditioning the material in a carbon dioxide medium at a pressure of 50 to 90 kg/cm² (about 5 to 9 MPa) for a period of from 1 to 6 hours.

2. A method according to claim 1, **characterized in that** a temperature in the range of 2°C to 120°C is maintained during the conditioning of the material in a carbon dioxide medium.

3. A method according to claim 1 and claim 2, **characterized in that** the drying of the material is carried out either under a vacuum up to 0.01 kg/cm² or at atmospheric pressure, the drying being effected a temperature of 10 to 150°C for a period of 30 minutes to 24 hours.

4. A method according to claim 1 and claim 2, **characterized in that** the chopped material is frozen to a temperature within the range of -20 to -180°C.

5. A method according to claims 1-3, **characterized in that** the comminuting of the frozen material is carried out to a particle size distribution in the range of 1 to 1000 microns.

6. A method according to claims 1-3, **characterized in that** the natural starting material is selected from the vegetable material including vegetables, berries, fruit, cereals and their seeds, water plants, galenic materials, mushrooms and nut shells, or from the material of animal origin, including eggshells, especially the eggs of chicken and reptiles, shells of shellfish and skin of animals.

7. A method according to claims 1-5, **characterized in that** when the starting material is fresh carrot, the drying is carried out at a pressure of 1,033 kg/cm² and at a temperature of 40°C for 6 hours , the freezing and comminuting steps are carried out at -80°C, and the comminuted material is sterilized in a carbon dioxide medium at a pressure of 70 kg/cm² and at a temperature of 60°C for 3 hours.

8. A method according to claims 1-3, **characterized in that** when the starting material is apples, the drying is carried out at a pressure of 0.2 kg/cm² and at a temperature of 25°C for 8 hours, the freezing and comminuting steps are carried out at -80°C, and the comminuted material is sterilized in a carbon dioxide medium at a pressure of 60 kg/cm² and at a temperature of 50°C for 1 hour.

9. A method according to claims 1-3, **characterized in that** when the starting material is *Aronia* berries, the drying is carried out at a pressure of 0.5 kg/cm² and at a temperature of 30°C for 16 hours, the freezing and comminuting steps are carried out at -100°C, and the comminuted material is sterilized in a carbon dioxide medium at a pressure of 90 kg/cm² and temperature of 40°C for 2.5 hours.

10. A method according to claims 1-3, **characterized in that** when the starting material is pumpkin, the drying is carried out at a pressure of 0.01 kg/cm² and a temperature of 20°C for 6 hours, the freezing and comminuting steps are carried out at -30°C, and then the comminuted material is sterilized in a carbon dioxide medium at a pressure of 90 kg/cm² and at a temperature of 20°C for 2 hours.

11. A method according to claims 1-3, **characterized in that** when the starting material is oat seeds, the drying is carried out at a pressure of 0.01 kg/cm² and a temperature of 80°C for 5 hours, the freezing and comminuting steps are carried out at -50°C, and then the comminuted material is sterilized in a carbon dioxide medium at a pressure of 60 kg/cm² and at a temperature of 30°C for 4 hours.

12. A method according to claims 1-3, **characterized in that** when the starting material is black currant leaves, the drying is carried out at a pressure of 0,03 kg/cm² and a temperature of 40°C for 4 hours, the freezing and comminuting steps are carried out at -30°C, and then the comminuted material is sterilized in a carbon dioxide medium at a pressure of 90 kg/cm² and at a temperature of 45°C for 2 hours.

13. A method according to claims 1-3, **characterized in that** when the starting material is chicken egg shells, the drying is carried out at a pressure of 0,3 kg/cm² and a temperature of 150°C for 30 minutes, the freezing and comminuting steps are carried out at -40°C, and then the comminuted material is sterilized in a carbon dioxide medium at a pressure of 50 kg/cm² and at a temperature of 2°C for 1 hour.

14. A method according to claims 1-3, **characterized in that** when the starting material is parsley, the drying is carried out at a pressure of 0.8 kg/cm² and a temperature of 80°C for 2 hours, the freezing and comminuting steps are carried out at -100°C, and then the comminuted material is sterilized in a carbon dioxide medium at a pressure of 90 kg/cm² and at a temperature of 80°C for 6 hours.

15. A method according to claim 1, **characterized in that** it additionally comprises the step of extracting the resulting sterilized material with water or a suitable organic liquid.

16. A health food additive obtained by the method according to any one of claims 1 to 15, having a particle size distribution in the range of 1 to 1000 microns.
